# NEUE EUROPÄISCHE PATENTSCHRIFT

(11) **EP 2 822 178 B2**
(45) Veröffentlichungstag und Bekanntmachung des Hinweises auf die Entscheidung über den Einspruch: **22.02.2023**
(45) Hinweis auf die Patenterteilung: 19.10.2016
(21) Anmeldenummer: 13172566.5
(22) Anmeldetag: 18.06.2013
(51) Int. Cl.: H02S 20/30, H02S 10/40, H02S 30/20

(54) **Mobile Solarinselanlage**
Mobile solar island installation
Installation d'île solaire mobile

(43) Veröffentlichungstag der Anmeldung: 07.01.2015
(73) Patentinhaber: SARL ECOSUN INNOVATIONS, 68490 Hombourg (FR)
(72) Erfinder: Bauersachs, Bernhard, 46485 Wesel (DE)
(74) Vertreter: Dr. Stark & Partner Patentanwälte mbB

(56) Entgegenhaltungen:
- WO-A1-2009/103974
- WO-A1-2010/093476
- WO-A1-2011/128463
- WO-A1-2011/157868
- WO-A1-2012/057178
- WO-A1-2012/090191
- WO-A2-2010/037005
- WO-A2-2013/061354
- AU-A4- 2012 101 345
- DE-U1-202007 012 724
- US-A- 4 261 329
- US-A- 5 520 747
- US-A- 6 091 016
- US-A1- 2004 124 711
- US-A1- 2005 055 891
- US-A1- 2008 196 758
- US-A1- 2010 000 592
- US-A1- 2010 032 955
- US-A1- 2010 206 354
- US-A1- 2010 206 354
- US-A1- 2011 047 891
- US-A1- 2011 049 992
- US-A1- 2011 056 146
- US-A1- 2011 062 913
- US-A1- 2011 146 751
- US-A1- 2011 146 751
- US-A1- 2011 253 614
- US-A1- 2011 315 192
- US-A1- 2012 080 072
- US-A1- 2012 291 847
- US-A1- 2012 293 111
- US-A1- 2012 299 527
- US-A1- 2013 025 280
- US-A1- 2013 082 637
- US-A1- 2013 106 191
- US-B2- 7 248 018
- US-B2- 8 295 033
- US-B2- 8 365 479
- US-B2- 8 371 088
- "7. Photovoltaik" In: Valentin Crastan: "Elektrische Energieversorgung 2", 2012, Springer, XP055400169, ISBN: 978-3-662-48964-2 vol. 2, page 436,
- John Laumer: "MSolar Portable Solar Power System By Solzar : 20, 50, Or 100 Watts In A Box", Treehugger.com, 11 November 2008 (2008-11-11), XP055400176, Retrieved from the Internet: URL:https://www.treehugger.com/renewable-e nergy/msolar-portable-solar-power-system-b y-solzar-20-50-or-100-watts-in-a-box.html

## Beschreibung

Die Erfindung betrifft eine mobile Solarinselanlage, mit flächigen photovoltaischen Solarmodulen, einem Energiespeicher und einem mit den Solarmodulen und dem Energiespeicher verbundenen Laderegler.

Aus der Praxis sind derartige Solarinselanlagen bekannt, deren Besonderheit darin besteht, dass es sich um eine Stromnetz-autarke Solarstromanlage handelt, die zumindest temporär, insbesondere permanent, vom öffentlichen Stromnetz getrennt ist und auch insoweit isoliert betrieben wird.

Eine solche Trennung kann beispielsweise nötig sein, weil regional keine Stromversorgung vorhanden ist, aber ein entsprechender Versorgungsbedarf besteht.

Nachteilig hierbei ist, dass vorbekannte Solarinselanlagen aus mehreren separaten Elementen bestehen, die erst am Einsatzort zu einem System kombiniert werden. Durch den Aufbau und den Transport dieser einzelnen Elemente ist sowohl ein erhöhter Transportaufwand als auch eine aufwändige Inbetriebnahme erforderlich. Zudem müssen für den Transport zum Einsatzort die einzelnen Elemente transportsicher in geeigneten Behältnissen verstaut werden.

Sowohl das Dokument US 2011/0146751 A1 als auch das Dokument US 2010/0206354 A1 zeigen den gattungsbildenden Stand der Technik entsprechend der Präambel des Anspruchs 1.

Aufgabe der Erfindung ist es, die vorgenannten Nachteile zu vermeiden und eine vereinfachte Möglichkeit einer transportablen Solarinselanlage anzugeben.

Diese Aufgabe wird dadurch gelöst, dass die mobile Solarinselanlage in einen Container mit zwei Längswandungen, zwei Querwandungen, einem Boden und einer Oberseite, insbesondere einen ISO-Container, integriert ist, in dem auch der Lageregler sowie der Energiespeicher, insbesondere in fest installierter Form, vorgesehen sind, wobei der Container sowie zumindest ein Teil der Solarmodule derart ausgebildet sind, dass die Solarmodule für den Transport der Solarinselanlage im Inneren des Containers verstaubar und bei Betrieb der Solarinselanlage außerhalb des Containers anordnenbar sind.

Hierdurch sind die einzelnen Elemente der Solarinselanlage beim Transport vor äußeren Einflüssen geschützt und es entfallen Tätigkeiten zur Verbindung der einzelnen Elemente miteinander, da die Verbindungen dauerhaft vorgesehen sind.

Dabei ist zumindest eine Querwandung des Containers mit wenigstens einem aus dieser Querwandung des Containers herausziehbaren, vertikal ausgerichteten Auszug versehen, wobei ein Teil der Solarmodule der Solarinselanlage in diesem Auszug angeordnet ist, so dass eine große Anzahl von Solarmodulen, welche während des Betriebs zumindest in etwa gleich ausgerichtet sein können, vorgesehen sind.

Erfindungsgemäß kann zumindest ein Auszug mit wenigstens einem weiteren, an dem außenseitigen (nicht dem Container zuweisenden) Endbereich des Auszugs gelenkig angeschlagenen ausklappbaren Auszugsteilbereich versehen sein, so dass die Anzahl der Solarmodule nochmals gesteigert werden kann. Alternativ können auch Auszugsteilbereiche translatorisch verlagerbar vorgesehen sein.

Dabei kann zumindest ein ausklappbarer Auszugsteilbereich mit wenigstens einem weiteren, an dem außenseitigen (nicht dem Container zuweisenden) Endbereich des Auszugsteilbereichs gelenkig angeschlagenen ausklappbaren Auszugsteilbereich versehen sein, so dass eine möglichst große nutzbare Länge resultiert, da kein überlappender Bereich für die Befestigung ungenutzt verbleiben muss.

Auch kann zumindest ein Auszug und/oder ein Auszugsteilbereich unterseitig mit einem Stützelement, welches wenigstens eine Rolle und/oder ein Rad umfasst, versehen sein, wobei wenigstens ein Stützelement im Bereich des außenseitigen (nicht dem Container zuweisenden) Endbereichs des Auszugsteilbereichs vorgesehen ist.

Erfindungsgemäss ist der Container an seiner Längswandung und vorzugsweise auch an seiner Oberseite ebenfalls mit Solarmodulen versehen, so dass weitere Solarmodule ohne zusätzliche seitliche Erstreckung der Solarinselanlage vorgesehen sein können.

Dabei kann die an der Oberseite und/oder an der einen Längswandung des Containers vorgesehenen Solarmodule für den Transport der Solarinselanlage mittels zumindest eines flächigen, insbesondere als an dem Container angebrachte Klappe ausgebildeten, Schutzelementes abdeckbar sein.

Hierbei kann zumindest ein Schutzelement aus Holz und/oder Kork bestehen. Diese Schutzelemente können beispielsweise durch einfache Schraubbefestigungen an dem Container angebracht sein.

Erfindungsgemäss sind die an der Oberseite und/oder der einen Längswandung des Containers vorgesehenen Solarmodule für den Betrieb der Solarinselanlage in eine winklig zur Oberseite und/oder der einen Längswandung des Containers ausgerichtete Position einstellbar, so dass für einen möglichst guten Wirkungsgrad die Ausrichtung der Solarmodule auf eine optimale Winkellage einstellbar ist.

Auch können hierfür die für den Transport der Solarinselanlage im Inneren des Containers verstaubaren Solarmodule für den Betrieb der Solarinselanlage in eine winklig zur Oberseite des Containers ausgerichtete Position einstellbar sein. Der Winkel kann dabei 0° bis 90°, insbesondere 30° - 60°, und vorzugsweise ca. 45° betragen.

Bei einem bevorzugten Ausführungsbeispiel der Erfindung kann zumindest ein Auszug mit drei Solarmodulen bestückt sein, die sich zumindest in etwa zur Längserstreckung des Containers aufsummieren. Vorzugsweise können einheitliche Solarmodule Verwendung finden.

Vorzugsweise kann zumindest ein Auszug ein die Solarmodule tragendes Metallgestell, insbesondere Aluminiumgestell aufweisen, so dass bei geringem Gewicht und guter Widerstandfähigkeit gegen äußere Einflüsse eine stabile und haltbare Grundkonstruktion zur Anbringung der Solarmodule gegeben ist.

Auch kann zumindest ein Auszugsteilbereich mit drei Solarmodulen bestückt sein, die sich zumindest in etwa zur Längserstreckung des Containers aufsummieren. Vorzugsweise können einheitliche Solarmodule Verwendung finden.

Erfindungsgemäß kann zumindest ein Auszugsteilbereich ein die Solarmodule tragendes Metallgestell, insbesondere Aluminiumgestell, aufweisen, so dass bei geringem Gewicht und guter Widerstandfähigkeit gegen äußere Einflüsse eine stabile und haltbare Grundkonstruktion zur Anbringung der Solarmodule gegeben ist.

Im Folgenden wird ein in der Zeichnung dargestelltes Ausführungsbeispiel der Erfindung erläutert, welches in den verschieden Figuren mit unterschiedlich stark ausgeklappten bzw. ausgezogenen Solarmodulen dargestellt ist.

In allen Figuren werden für gleiche bzw. gleichartige Bauteile übereinstimmende Bezugszeichen verwendet.

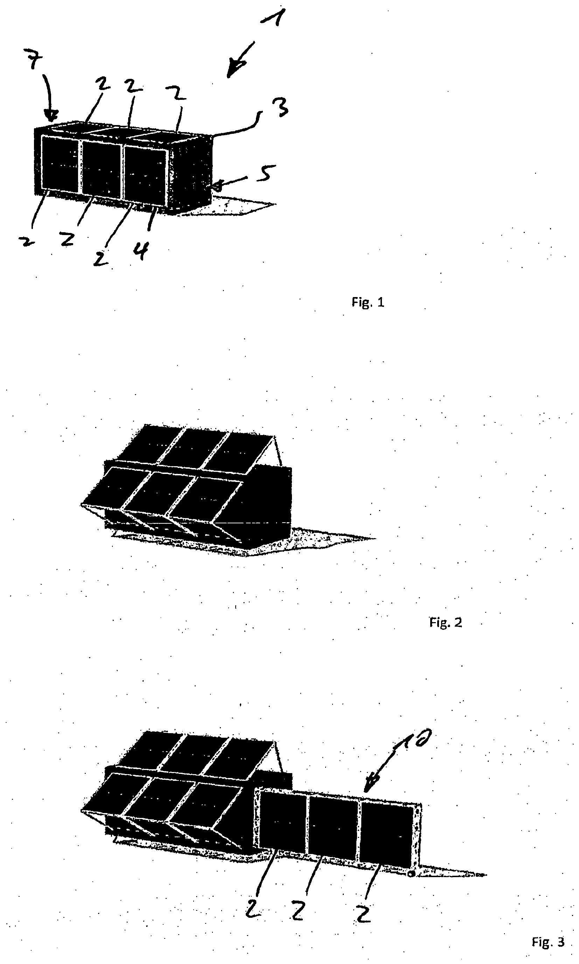

Fig. 1 zeigt eine mobile Solarinselanlage 1, die in einen Container 3 mit zwei Längswandungen 4, zwei Querwandungen 5, einem Boden 6 und einer Oberseite 7 integriert ist. Der Container 3 ist an seiner Oberseite 7 und an einer Längswandung 4 mit flächigen photovoltaischen Solarmodulen 2 versehen.

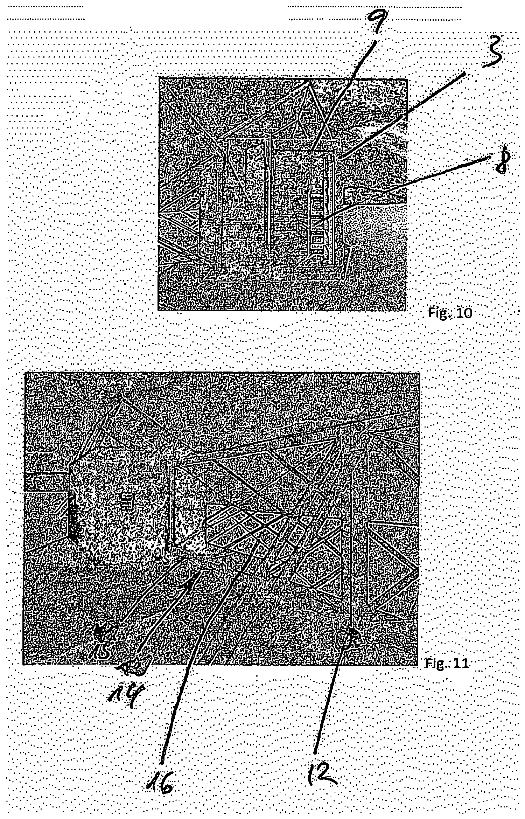

Wie aus Fig. 10 ersichtlich, sind im Inneren des Containers 3 Energiespeicher 8 vorgesehen, die als in Regalen angeordnete Akkus, insbesondere in Form von Kfz-Starter-batterien, ausgebildet sein können. Weiterhin ist ein mit den Solarmodulen 2 und dem Energiespeicher 8 verbundener Laderegler 9 im Inneren des Containers 3 vorgesehen.

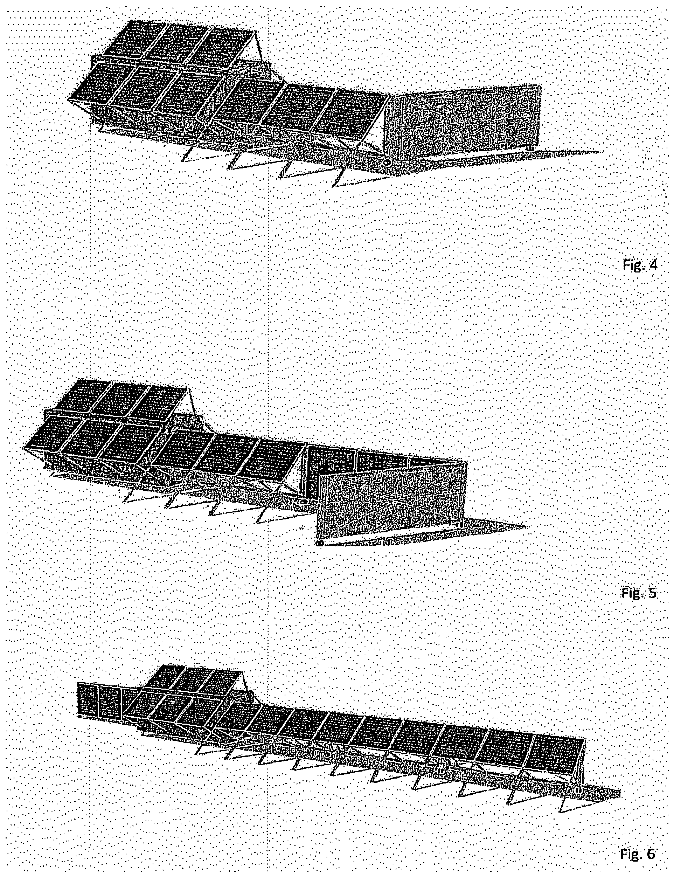

Die Fig. 3 bis 8 zeigen, dass beide Querwandungen 5 des Containers 3 jeweils mit einem aus dieser Querwandung 5 des Containers 3 herausziehbaren, vertikal ausgerichteten Auszug 10 versehen sind, der jeweils mit Solarmodulen 2 versehen ist. Darüber hinaus sind die beiden Auszüge 10 jeweils mit zwei weiteren Auszugsteilbereichen 11 versehen, die an dem außenseitigen (nicht dem Container 3 zuweisenden) Endbereich des Auszugs 10 bzw. des Auszugsteilbereichs 11 gelenkig angeschlagenen und damit ausklappbar ausgebildet sind.

Die Auszüge 10 und die Auszugsteilbereiche 11 sind jeweils unterseitig mit einem Stützelement, welches wenigstens ein Rad 12 umfasst, versehen, wobei die Räder im Bereich des außenseitigen (nicht dem Container 3 zuweisenden) Endbereichs des Auszugs 10 bzw. Auszugsteilbereichs 11 vorgesehen sind.

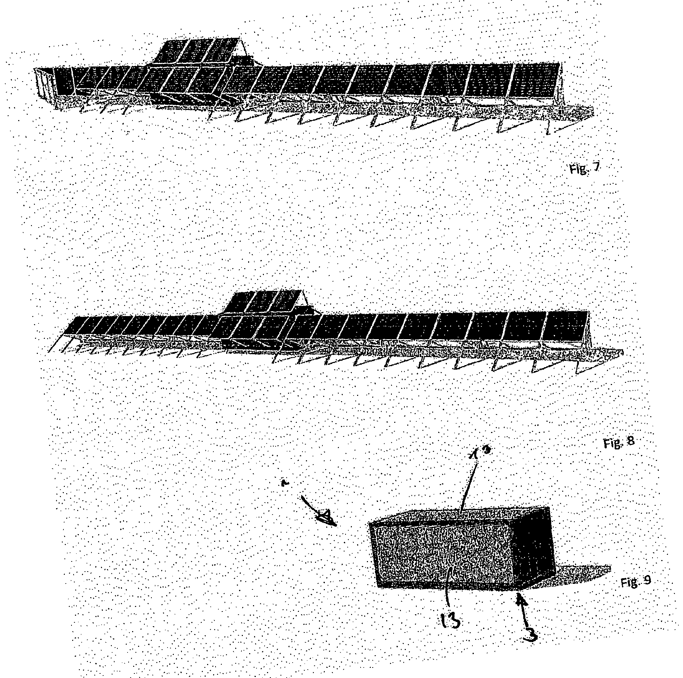

Wie aus Fig. 9 ersichtlich, sind die an der Oberseite 7 und an der einen Längswandung 4 des Containers 3 vorgesehenen Solarmodule 2 für den Transport der Solarinselanlage 1 mittels eines flächigen Schutzelementes 13 abdeckbar, welches aus Holz besteht.

Sämtliche Solarmodule 2 können für den Betrieb der Solarinselanlage 1 in eine winklig zur Oberseite 7 bzw. der einen Längswandung 4 des Containers 3 bzw. dem jeweiligen Auszug 10 bzw. dem jeweiligen Auszugsteilbereich 11 ausgerichtete Position einstellbar sind, wobei der Winkel im dargestellten Ausführungsbeispiel jeweils ca. 45° beträgt. Hierzu können jeweils entsprechende Stützen 17 vorgesehen sein, die sich gegen den Untergrund oder aber den Container 3 abstützen.

Wie insbesondere aus Fig. 11 ersichtlich, umfassen die Auszüge 10 bzw. Auszugsteilbereiche 11 jeweils ein drei übereinstimmende Solarmodule 2 tragendes Metallgestell 14, welches aus Aluminiumprofilen gebaut sein kann. Insoweit kann jeweils ein Rahmen 15 mit stabilisierender Diagonalverspannung 16 vorgesehen sein.

Aus der Zusammenschau von Fig. 10 und 11 ist ersichtlich, dass der durch die eine Querwandung 5 des Containers 3 ausziehbare Auszug 10 in unmittelbarer Nachbarschaft zu der vorderen Längswandung 4 des Containers 3 vorgesehen ist, wohingegen der an der gegenüberliegenden Querwandung 5 des Containers 3 ausziehbare Auszug 10 um einen entsprechenden Betrag zu der vorderen Längswandung 4 des Containers 3 beabstandet vorgesehen ist.

## Patentansprüche

1. Mobile Solarinselanlage (1), mit flächigen photovoltaischen Solarmodulen (2), einem Energiespeicher (8) und einem mit den Solarmodulen (2) und dem Energiespeicher (8) verbundenen Laderegler (9), wobei die mobile Solaranlage (1) in einen Container (3) mit zwei Längswandungen (4), zwei Querwandungen (5), einem Boden (6) und einer Oberseite (7), insbesondere einen ISO-Container, integriert ist, in dem auch der Laderegler (9) sowie der Energiespeicher (8), insbesondere in fest installierter Form, vorgesehen sind, wobei der Container (3) sowie zumindest ein Teil der Solarmodule (2) derart ausgebildet sind, dass die Solarmodule (2) für den Transport der Solarinselanlage (1) im Inneren des Containers (3) verstaubar und bei Betrieb der Solarinselanlage (1) außerhalb des Containers (3) anordnenbar sind, **dadurch gekennzeichnet, dass** zumindest eine Querwandung (5) des Containers (3) mit wenigstens einem aus dieser Querwandung (5) des Containers (3) herausziehbaren, vertikal ausgerichteten Auszug (10) versehen ist, wobei ein Teil der Solarmodule (2) der Solarinselanlage (1) in diesem Auszug (10) angeordnet ist und dass der Container (3) an einer Längswandung (4) und vorzugsweise auch an seiner Oberseite (7) ebenfalls mit Solarmodulen (2) versehen ist, **wobei** die an der Oberseite (7) und/oder der einen Längswandung (4) des Containers (3) vorgesehenen Solarmodule (2) für den Betrieb der Solarinselanlage (1) in eine winklig zur Oberseite (7) und/oder der einen Längswandung (4) des Containers (3) ausgerichtete Position einstellbar sind.

2. Solarinselanlage (1) nach dem vorhergehenden Anspruch, **dadurch gekennzeichnet, dass** zumindest ein Auszug (10) mit wenigstens einem weiteren, an dem außenseitigen Endbereich des Auszugs (10) gelenkig angeschlagenen ausklappbaren Auszugsteilbereich (11) versehen ist.

3. Solarinselanlage (1) nach dem vorhergehenden Anspruch, **dadurch gekennzeichnet, dass** zumindest ein ausklappbarer Auszugsteilbereich (11) mit wenigstens einem weiteren, an dem außenseitigen Endbereich des Auszugsteilbereichs (11) gelenkig angeschlagenen ausklappbaren Auszugsteilbereich (11) versehen ist.

4. Solarinselanlage (1) einem der Ansprüche 1 bis 3, **dadurch gekennzeichnet, dass** zumindest ein Auszug (10) und/oder ein Auszugsteilbereich (11) unterseitig mit einem Stützelement, welches wenigstens eine Rolle und/oder ein Rad (12) umfasst, versehen ist, wobei wenigstens ein Stützelement im Bereich des außenseitigen Endbereichs des Auszugs (10) bzw. Auszugsteilbereichs (11) vorgesehen ist.

5. Solarinselanlage (1) nach einem der vorhergehenden Ansprüche, **dadurch gekennzeichnet, dass** die an der Oberseite (7) und/oder an der einen Längswandung (4) des Containers (3) vorgesehenen Solarmodule (2) für den Transport der Solarinselanlage (1) mittels zumindest eines flächigen, insbesondere als an dem Container (3) angebrachte Klappe ausgebildeten, Schutzelementes (13) abdeckbar sind.

6. Solarinselanlage (1) einem der Ansprüche 1 bis 5, **dadurch gekennzeichnet, dass** zumindest ein Schutzelement (13) aus Holz und/oder Kork besteht.

7. Solarinselanlage (1) nach einem der vorhergehenden Ansprüche, **dadurch gekennzeichnet, dass** die für den Transport der Solarinselanlage (1) im Inneren des Containers (3) verstaubaren Solarmodule (2) für den Betrieb der Solarinselanlage (1) in eine winklig zur Oberseite (7) des Containers (3) ausgerichtete Position einstellbar sind.

8. Solarinselanlage (1) nach einem der vorhergehenden Ansprüche, **dadurch gekennzeichnet, dass** zumindest ein Auszug (10) mit drei Solarmodulen (2) bestückt ist.

9. Solarinselanlage (1) nach einem der vorhergehenden Ansprüche, **dadurch gekennzeichnet, dass** zumindest ein Auszug (10) ein die Solarmodule (2) tragendes Metallgestell (14), insbesondere Aluminiumgestell aufweist.

10. Solarinselanlage (1) nach einem der vorhergehenden Ansprüche, **dadurch gekennzeichnet, dass** zumindest ein Auszugsteilbereich (11) mit drei Solarmodulen (2) bestückt ist.

11. Solarinselanlage (1) nach einem der vorhergehenden Ansprüche, **dadurch gekennzeichnet, dass** zumindest ein Auszugsteilbereich (11) ein die Solarmodule (2) tragendes Metallgestell (14), insbesondere Aluminiumgestell aufweist.

## Claims

1. Mobile solar island installation (1), comprising flat photovoltaic solar modules (2), an energy store (8), and a charging regulator (9) connected to the solar modules (2) and the energy store (8), wherein the mobile solar system (1) is integrated into a container (3) with two longitudinal walls (4), two transverse walls (5), a floor (6), and an upper side (7), in particular an ISO container, in which the charging regulator (9) and the energy store (8) are provided, in particular in a fixed installed manner, wherein the container (3) and at least a part of the solar modules (2) are configured in such a way that, for transport, the solar modules (2) can be stowed in the interior of the container (3) and, when the solar island installation (1) is in operation, can be arranged outside the container (3), **characterised in that** at least one transverse wall (5) of the container (3) is provided with at least one vertically aligned extension element (10), which can be drawn out of this transverse wall (5) of the container (3), wherein a part of the solar modules (2) of the solar island installation (1) are arranged in this extension element (10), wherein the container (3) is provided on its upper side (7) and/or at a longitudinal wall (4) likewise with solar modules (2), wherein the solar modules (2) provided on the upper side (7) and/or the one longitudinal wall (4) of the container (3) can be adjusted, for the operation of the solar island installation (1), into a position aligned at an angle to the upper side (7) and/or to the one longitudinal wall (4) of the container (3).

2. Solar island installation (1) according to the preceding claim, **characterised in that** at least one extension element (10) is provided with at least one further extension part region (11), attached in jointed manner to the outside end region of the extension element (10) and capable of being folded outwards.

3. Solar island installation (1) according to the preceding claim, **characterised in that** at least one extension part region (11), capable of being folded outwards, is provided with at least one further extension part region (11), attached in jointed manner to the outside end region of the extension element (11) and capable of being folded outwards.

4. Solar island installation (1) according to any one of claims 1 to 3, **characterised in that** at least one extension element (10) and/or an extension part region (11) is provided on the underside with a support element, which comprises at least one roller and/or a wheel (12), wherein at least one support element is provided in the region of the outside end region of the extension element (10) or extension part region (11) respectively.

5. Solar island installation (1) according to any one of the preceding claims, **characterised in that** the solar modules (2) provided on the upper side (7) and/or at the one longitudinal wall (4) of the container (3) can be covered, for the transport of the solar island installation (1) by means of at least one flat protection element (13), configured in particular as a flap attached to the container (3).

6. Solar island installation (1) according to any one of claims 1 to 5, **characterised in that** at least one protection element (13) consists of wood and/or cork.

7. Solar island installation (1) according to any one of the preceding claims, **characterised in that** the solar modules (2) which, for the transport of the solar island installation (1), can be stowed in the interior of the container (3), can, for the operation of the solar island installation (1), be adjusted into a position aligned at an angle to the upper side (7) of the container (3).

8. Solar island installation (1) according to any one of the preceding claims, **characterised in that** at least one extension element (10) is fitted with three solar modules (2).

9. Solar island installation (1) according to any one of the preceding claims, **characterised in that** at least one extension element (10) comprises a metal frame (14), in particular an aluminium frame, carrying the solar modules (2).

10. Solar island installation (1) according to any one of the preceding claims, **characterised in that** at least one extension part region (11) is equipped with three solar modules (2).

11. Solar island installation (1) according to any one of the preceding claims, **characterised in that** at least one extension part region (11) comprises a metal frame (14), in particular an aluminium frame, carrying the solar modules (2).

## Revendications

1. Installation d'îlot solaire mobile (1), comprenant des modules solaires photovoltaïques plans (2), un accumulateur d'énergie (8) et un régulateur de charge (9) relié aux modules solaires (2) et à l'accumulateur d'énergie (8), l'installation d'îlot solaire mobile (1) étant intégrée dans un conteneur (3) comportant deux parois longitudinales (4), deux parois transversales (5), un fond (6) et un côté supérieur (7), en particulier un conteneur ISO, dans lequel le régulateur de charge (9) et l'accumulateur d'énergie (8) sont aussi prévus, en particulier sous une forme installée à demeure, le conteneur (3) ainsi qu'au moins une partie des modules solaires (2) étant conçus de façon que les modules solaires (2) puissent être rangés à l'intérieur du conteneur (3) pour le transport de l'installation d'îlot solaire (1) et disposés à l'extérieur du conteneur (3) lors du fonctionnement de l'installation d'îlot solaire (1), **caractérisée en ce qu'**au moins une paroi transversale (5) du conteneur (3) est pourvue d'au moins une rallonge (10) orientée verticalement, extractible de cette paroi transversale (5) du conteneur (3), une partie des modules solaires (2) de l'installation d'îlot solaire (1) étant disposée dans cette rallonge (10), et que le conteneur (3) est également pourvu de modules solaires (2) sur son côté supérieur (7) et/ou sur une paroi longitudinale (4) et que les modules solaires (2) prévus sur le côté supérieur (7) et/ou une paroi longitudinale (4) du conteneur (3) sont réglables dans une position orientée angulairement par rapport au côté supérieur (7) et/ou à ladite paroi longitudinale (4) du conteneur (3) pour le fonctionnement de l'installation d'îlot solaire (1).

2. Installation d'îlot solaire (1) selon la revendication précédente, **caractérisée en ce qu'**au moins une rallonge (10) est pourvue d'au moins une autre zone partielle de rallonge (11) déployable, attachée de manière articulée à la zone d'extrémité extérieure de la rallonge (10).

3. Installation d'îlot solaire (1) selon la revendication précédente, **caractérisée en ce qu'**au moins une zone partielle de rallonge (11) déployable est pourvue d'au moins une autre zone partielle de rallonge (11), attachée de manière articulée à la zone d'extrémité extérieure de la zone partielle de rallonge (11).

4. Installation d'îlot solaire (1) selon l'une des revendications 1 à 3, **caractérisée en ce qu'**au moins une rallonge (10) et/ou une zone partielle de rallonge (11) est pourvue du côté inférieur d'un élément d'appui qui comprend au moins un galet et/ou une roue (12), au moins un élément d'appui étant prévu dans la région de la zone d'extrémité extérieure de la rallonge (10) ou de la zone partielle de rallonge (11).

5. Installation d'îlot solaire (1) selon l'une des revendications précédentes, **caractérisée en ce que** les modules solaires (2) prévus sur le côté supérieur (7) et/ou sur la paroi longitudinale (4) du conteneur (3) peuvent être recouverts, pour le transport de l'installation d'îlot solaire (1), au moyen d'au moins un élément de protection (13) plan, en particulier réalisé sous la forme d'un volet installé sur le conteneur (3).

6. Installation d'îlot solaire (1) selon l'une des revendications 1 à 5, **caractérisée en ce qu'**au moins un élément de protection (13) est en bois et/ou en liège.

7. Installation d'îlot solaire (1) selon l'une des revendications précédentes, **caractérisée en ce que** les modules solaires (2) pouvant être rangés à l'intérieur du conteneur (3) pour le transport de l'installation d'îlot solaire (1) sont réglables dans une position orientée angulairement par rapport au côté supérieur (7) du conteneur (3) pour le fonctionnement de l'installation d'îlot solaire (1).

8. Installation d'îlot solaire (1) selon l'une des revendications précédentes, **caractérisée en ce qu'**au moins une rallonge (10) est équipée de trois modules solaires (2).

9. Installation d'îlot solaire (1) selon l'une des revendications précédentes, **caractérisée en ce qu'**au moins une rallonge (10) présente un châssis métallique (14), en particulier un châssis en aluminium, portant les modules solaires (2).

10. Installation d'îlot solaire (1) selon l'une des revendications précédentes, **caractérisée en ce qu'**au moins une zone partielle de rallonge (11) est équipée de trois modules solaires (2).

11. Installation d'îlot solaire (1) selon l'une des revendications précédentes, **caractérisée en ce qu'**au moins une zone partielle de rallonge (11) présente un châssis métallique (14), en particulier un châssis en aluminium, portant les modules solaires (2).
